# EUROPEAN PATENT SPECIFICATION

(11) **EP 2 080 847 B1**
(45) Date of publication and mention of the grant of the patent: **27.04.2011**
(21) Application number: 09150571.9
(22) Date of filing: 14.01.2009
(51) Int. Cl.: E04D 13/00, A01M 29/00

(54) **Support Bracket**
Halteklammer
Support de montage

(30) Priority: 17.01.2008 GB 0800784; 05.09.2008 GB 0816164
(43) Date of publication of application: 22.07.2009
(73) Proprietor: P. & L. Systems Limited, Grimbald Crag Court Knaresborough, North Yorkshire HG5 8QB (GB)
(72) Inventor: Turner, Grahame, Malpas, Cheshire SY14 8PE (GB)
(74) Representative: Best, Rachel Elizabeth

(56) References cited:
- DE-A1- 19 947 356
- US-A- 5 996 814

## Description

The present invention relates to support brackets and more particularly, but not exclusively, to support brackets which are provided on a roof as a roof mount for supporting bird netting spaced from the roof.

US5996814 discloses a supporting device according to the preamble of claim 1 comprising three support members in a triangular array. The support members are releasably held in the array by retention means.

According to the present invention, there is provided a support bracket comprising an upper support member and a pair of base support members, the three support members being movable relative to each other and retention means to enable the support members to be securable in different positions relative to each other, the three support members each have a centrally disposed tubular element which in use is held parallel to the tubular elements of the other two support members such that the tubular elements are in a triangular array, said retention means selectively holding the three tubular elements in said triangular array relative to each other or releasing the tubular elements so that they can rotate relative to each other within said triangular array, the upper support member comprises means for supporting an article and also said means comprises an upper socket which is secured to, and which is directed substantially perpendicular to, the tubular element of the upper support member, and wherein the socket is adapted to receive an upwardly extending support arm, each base support member comprises base means for supporting the support bracket, each base means comprising a pair of angled base sockets secured to the tubular element of the base support member with the base sockets for each base support member meeting at right angles with a web extending between the pair of sockets of each base support member.

Conveniently, the socket comprises a releasable connection for the support arm.

Preferably each base socket is adapted to receive an outwardly extending leg. With some preferred arrangements each leg terminates remote from the socket with a support web and sometimes the support web is provided on a releasable foot.

In certain embodiments the three tubular elements are of identical external diameter and length. Often, the retention means retains each of the three tubular elements in contact with the other two tubular elements. In some arrangements the retention means comprises a pair of oppositely disposed end plates and also the end plates are held in position by means of a central bolt and nut connection, the bolt extending centrally between the three tubular elements. Conveniently, each end plate is generally triangular and, in addition, each end plate has an inturned lip along each edge for holding captive the tubular elements against movement away from each other.

Sometimes the corners of the triangular end plates are truncated.

In some arrangements the corners of the triangular end plates are truncated and each truncated corner also has an additional inturned lip. Preferably each inturned lip has one or more holes, each for receiving a self-drill screw to extend into and secure the associated tubular element.

Embodiments of the present invention will now be described in more detail. The description makes reference to the accompanying drawings in which:
Figure 1 is a perspective view of a support bracket according to the present invention in a first position,
Figure 2 is an end view of the support bracket of Figure 1,
Figure 3 is a side view of the support bracket of Figure 1,
Figure 4 is a perspective view of the Figure 1 arrangement with end plates removed,
Figures 5 to 7 are end views of the support bracket in a number of alternative configurations,
Figure 8 is an end view of an end plate with positions of tubular elements shown in broken lines,
Figure 9 is a perspective view of the end plate of Figure 8,
Figure 10 is an exploded view of the support bracket of Figure 1 with one end plate omitted,
Figure 11 is a perspective view of the Figure 1 bracket prior to a second end plate being attached,
Figure 12 shows a support structure incorporating the support bracket of Figure 1,
Figures 13 and 14 show perspective and end views of a further embodiment,
Figure 15 is a perspective view similar to Figure 1 of an alternative support bracket,
Figure 16 is an end view of the figure 15 support bracket, and
Figure 17 is a perspective view of the modified end plates of the figure 15 support bracket.

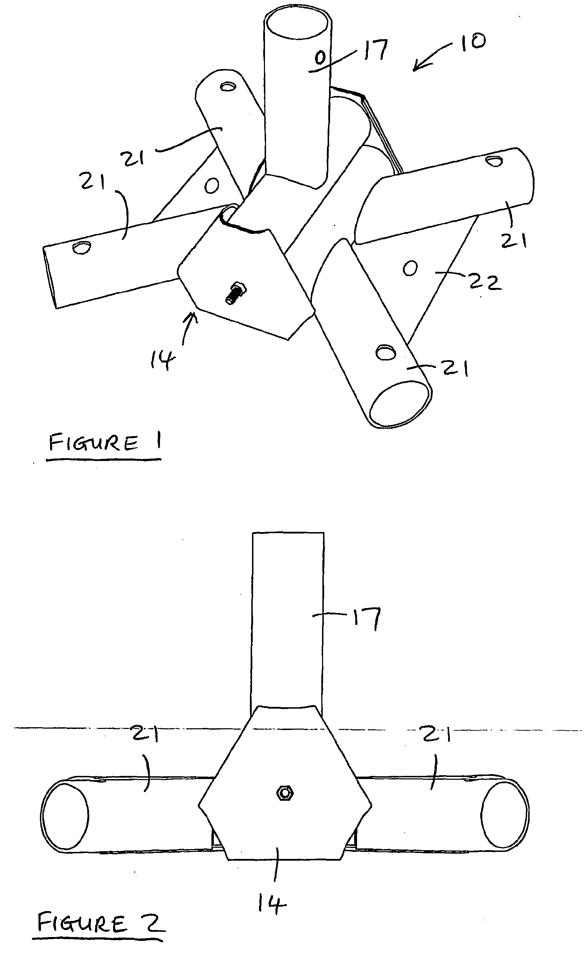

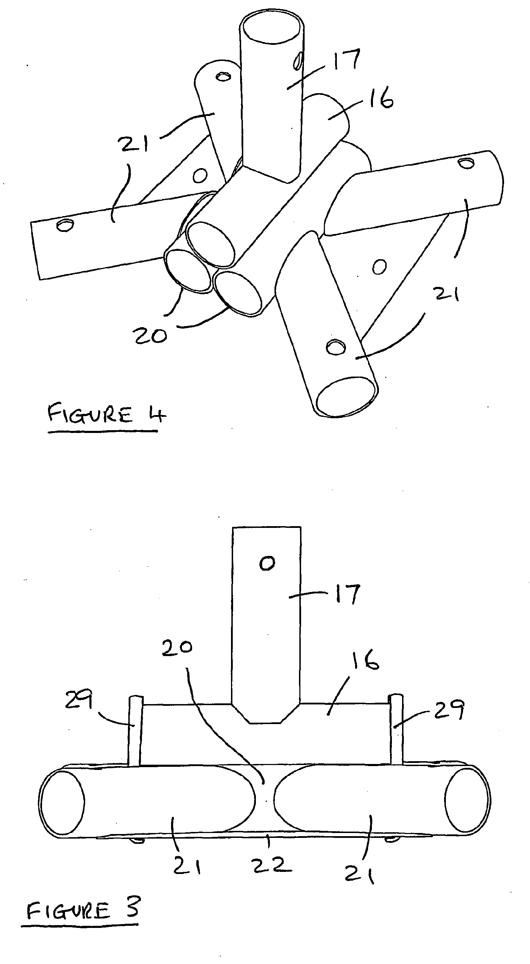

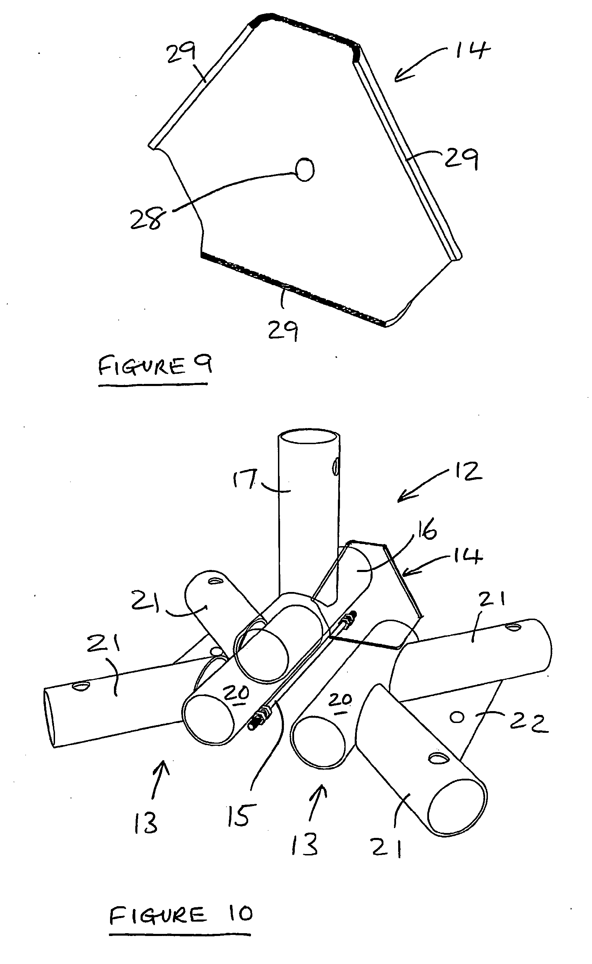

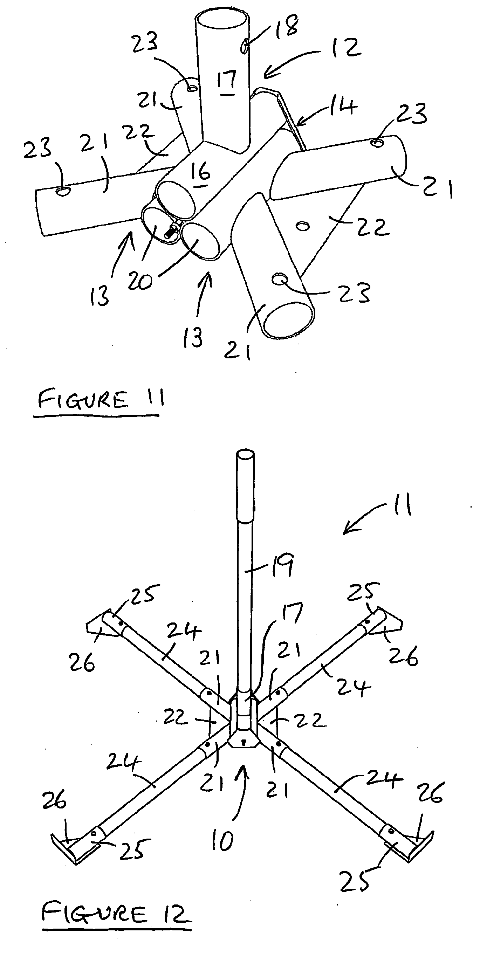

Figures 1 to 11 show a support bracket 10 and its component parts. The support bracket 10 is for use in a support structure 11 which is illustrated in Figure 12. The support structure 11 is intended primarily for use on a roof for supporting a bird net spaced from a roof (not shown) although other uses are readily apparent. The support structure 11 illustrated does not pierce the roof but, in alternative arrangements, it may be possible to attach the support structure to the roof.

Each support bracket 10 comprises an upper support member 12, a pair of base support members 13, a pair of end plates 14 and a threaded rod/nut combination 15.

The upper support member 12 has a central tubular element 16 of circular cross-section. Extending from a central part of the tubular element 16 is a tubular upper socket 17 which is substantially perpendicular to the tubular element 16 and which has a hole 18 for receiving a spring-loaded retaining pin of a supporting arm 19 insertable in the socket. (This is shown in Figure 12).

Each base support member 13 has a central tubular element 20 of circular cross-section. Extending from a central part of the tubular element 20 are a pair of angled tubular base sockets 21. The base sockets 21 are substantially perpendicular to each other and have a lower web portion 22 extending across the angle at the lowermost edge of the base sockets 21. The purpose of the web will be explained in due course, in this embodiment, each tubular base socket 21 has a hole 23 for receiving a spring-loaded retaining pin of an outwardly extending leg 24. Each leg 24 terminates with a removable foot 25 which is preferably secured to the leg with a spring-loaded retaining pin and which has a support web 26 which extends a short way towards the other leg 24 of the base support member 13.

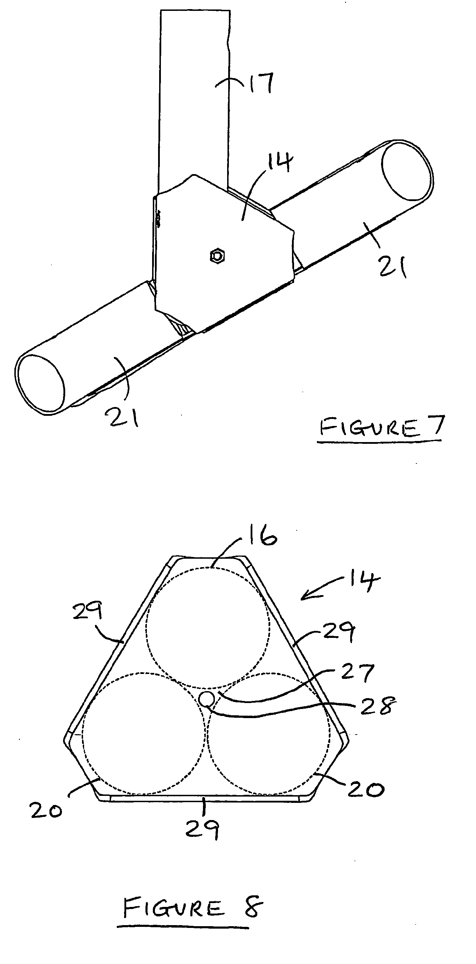

The lengths of the three tubular elements 16, 20 are substantially the same, as are their external diameters. This enables the three tubular elements to nestle together in a compact, triangular array which is particularly clear in Figures 8 and 11 for example and which has a small, central, lengthwise extending void 27 between the tubular elements 16, 20.

Two generally triangular end plates 14 are provided, each plate 14 having a central hole 28 and somewhat truncated corners. Each end plate 14 has its three edges turned inwards to form three retaining lips 29, the geometry being such that the lips 29 substantially engage the tubular elements 16, 20 when in their triangular array and prevent movement of the tubular elements 16, 20 away from each other. An end plate 14 is provided at each end of the triangular array and the threaded rod 15 is passed through the central hole 28 in one end plate, through the central void 27 and through the second end plate 14. A nut is then threaded onto the exposed end of the bolt and the nut is tightened so as to clamp the tubular elements together in fixed positions.

It will be understood that, prior to tightening, the tubular elements can be rotated relative to each other so that the associated sockets are pointing in the correct desired directions.

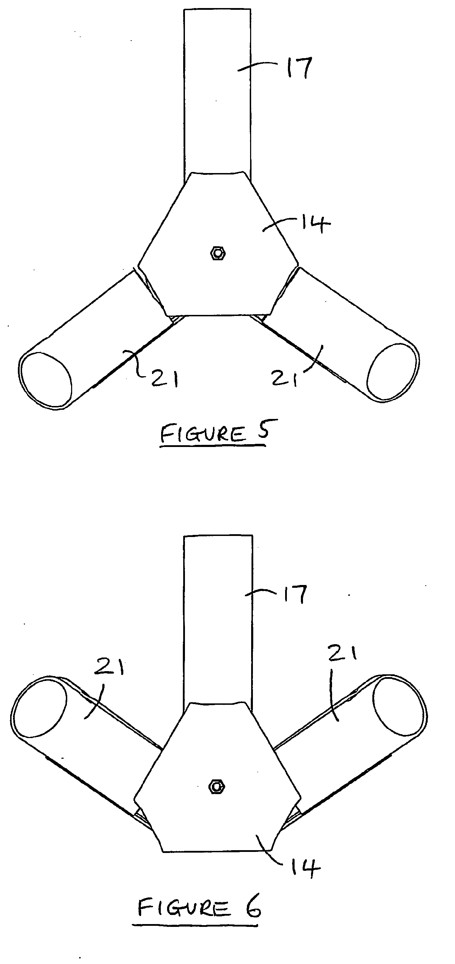

For example, if the support structure is to be used on a flat, horizontal roof, the support members 12, 13 will be arranged as shown in Figures 1 to 3 and 12. If, however, the support structure is to be mounted on the apex of a pitched roof then the Figure 5 configuration will be used with the lower tubular elements 20 being rotated to the correct angle of the pitched roof prior to tightening the end plates 14.

Similarly if the support structure is to be located in the channel of a V-shaped roof then the Figure 6 configuration can be used. In some situations, the support structure can be disposed on an angled section of roof and Figure 7 illustrates such a configuration.

It will be clear that the three tubular elements 16, 20 can be moved into and retained in many different configurations. Once the support arm 19 and the legs 24 are attached to the respective sockets, weights can be added to the legs 24 to retain the support structure in a stable condition. In the illustrated embodiment, a standard square paving slab can be placed between the pair of legs of each base support member 13. Corners of the slab can rest on the web portion 22 between the sockets and the support webs 26 of the feet 25. Other weight systems could be configured and used as desired and in some situations it would be possible to physically secure the bracket to the surface on which it is to be mounted by adhesive or bolting/screwing for example.

Other retention mechanisms are also possible instead of the lipped plates 14. For example, the tubular elements could receive bosses provided on a pair of end plates. In another variation, jubilee clips could be used to hold the tubular elements together. Other retention systems could be used whilst still keeping the basic feature that the tubular elements are in a triangular array and can be rotated relative to each other prior to clamping in the desired relative positions. The external diameters of the tubular elements need not be the same and could all be different. In addition, the tubular elements need not be in contact when in the triangular array but could be held in a suitable triangular array whilst being held apart from each other.

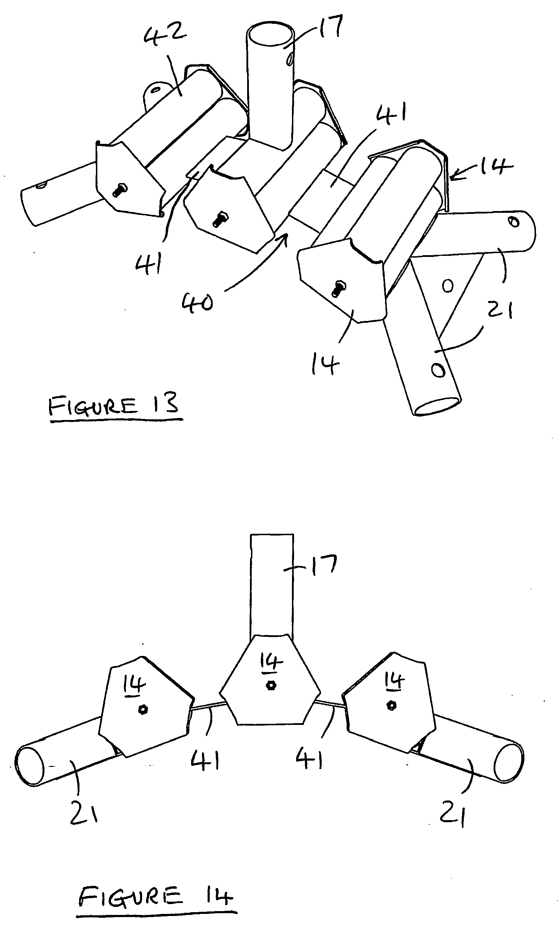

In some situations, the roof or other support may not have a simple angle on which the support structure is to sit. For example, it may be more of a curved profile. The above described support structure can be readily adapted by providing a number of bridging members 40 having a pair of spaced tubular elements joined by a bridging element 41, as illustrated in Figures 13 and 14. One tubular element of a bridging member 40 is retained between one pair of end plates with a base support member and either a blank tubular element 42 or the tubular element of an upper support member 12 and then the other tubular element of the bridging member is retained between a further pair of end plates. Any number of pairs of end plates 14 and triangular arrays could be linked to accommodate complex support surfaces.

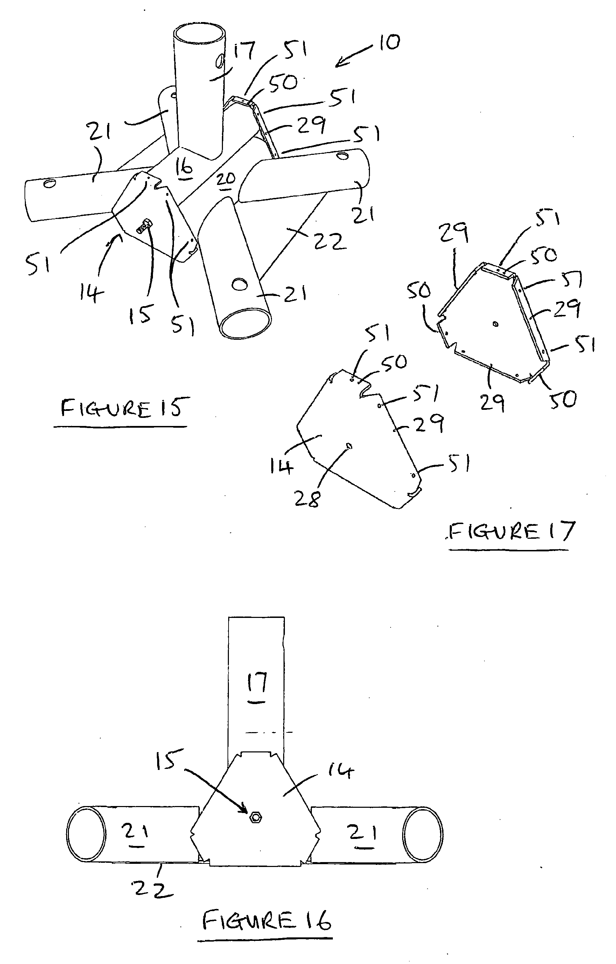

In an alternative arrangement illustrated by Figures 15 to 17, much of the construction and operation is similar to that shown in figures 1 to 14 and so like features have been given like reference numerals. The modified arrangement provides the end plates 14 with additional lips 50 between the original lips 29, the additional lips 50 also engaging the tubular elements 16, 20 when in their triangular array. The threaded rod/nut combination 15 is still used to assist in the securing of the tubular elements 16, 20 in their chosen positions.

In addition, the lips 29, 50 are provided with small holes 51 at the contact locations with the tubular elements 16, 20. Each hole 51 can receive a self-drill screw (not shown) which extends into the tubular elements 16, 20 to secure the end plates 14 against rotation and axial movement with respect to tubular elements.

It will be appreciated that not all holes may need a self-drill screw, depending on the particular circumstances. In addition the additional lips 50 could be regarded as optional but holes 51 could still be provided in the original lips 29. Also, a range of pre-threaded holes could be provided in the tubular elements 16, 20 to give a range of predetermined angular locations for attachment of the end plates 14.

The support brackets are ideally formed from metal such as steel or aluminium but other materials, such as plastics or composites, could also be used. Also, the legs and support arms could be longer or shorter or could even be telescopic as desired. In addition the legs and support arms could be permanently secured to the tubular elements in place of the releasable connections and similarly the feet could be permanently secured to the legs. Also other socket angles could be used if slabs with non-right angled corners were to be used as ballast. The sockets themselves could also be replaced by other suitable means.

## Claims

1. A support bracket (10) comprising,
an upper support member (12) and a pair of base support members (13), the three support members being movable relative to each other and retention means (14, 15) to enable the support members to be securable in different positions relative to each other;
the three support members each have a centrally disposed tubular element (16, 20) which in use is held parallel to the tubular elements of the other two support members such that the tubular elements are in a triangular array, said retention means (14, 15) selectively holding the three tubular elements in said triangular array relative to each other or releasing the tubular elements so that they can rotate relative to each other within said triangular array;
the upper support member (12) comprises means (17) for supporting an article, said means comprising an upper socket which is secured to, and which is directed substantially perpendicular to, the tubular element (16) of the upper support member (12) and wherein the socket (17) is adapted to receive an upwardly extending support arm (19),
***characterised in that*** each base support member (13) comprises base means for supporting the support bracket (10), each base means comprising a pair of angled base sockets (21) secured to the tubular element (20) of the base support member (13) with the base sockets (21) for each base support member (13) meeting at right angles with a web (22) extending between the pair of sockets (21) of each base support member (13).

2. A support bracket as claimed in claim 1 wherein each base socket (21) is adapted to receive an outwardly extending leg (24).

3. A support bracket as claimed in claim 2 wherein each leg (24) terminates remote from the socket (21) with a support web (26), the support web (26) being provided on a releasable foot (25).

4. A support bracket as claimed in any one of the preceding claims wherein the three tubular elements (16,20) are of identical external diameter and length.

5. A support bracket as claimed in claim 4 wherein the retention means (14, 15) retains each of the three tubular elements in contact with the other two tubular elements.

6. A support bracket as claimed in claim 5 wherein the retention means comprises a pair of oppositely disposed end plates (14).

7. A support bracket as claimed in claim 6 wherein the end plates (14) are held in position by means of a central bolt and nut connection (15), the bolt extending centrally between the three tubular elements.

8. A support bracket as claimed in claim 6 or claim 7 wherein each end plate (14) is generally triangular.

9. A support bracket as claimed in claim 8 wherein each end plate (14) has an inturned lip (29) along each edge for holding captive the tubular elements against movement away from each other.

10. A support bracket as claimed in claim 8 or claim 9 wherein the corners of the triangular end plates (14) are truncated.

11. A support bracket as claimed in claim 9 wherein the corners of the triangular end plates (14) are truncated and each truncated corner also has an additional lip (50).

12. A support bracket as claimed in claim 9 or 11 wherein each inturned lip (29, 50) has one or more holes (51), each for receiving a self-drill screw to extend into and secure the associated tubular element.

## Patentansprüche

1. Stützhalterung (10) mit
einem oberen Stützelement (12) und einem Paar Basisstützelemente (13), wobei die drei Stützelemente bezüglich einander beweglich sind, und einem Haltemittel (14, 15), damit die Stützelemente in verschiedenen Positionen zueinander befestigbar sind,
wobei die drei Stützelemente jeweils ein mittig angeordnetes rohrförmiges Element (16, 20) haben, das im Gebrauch parallel zu den rohrförmigen Elementen der anderen beiden Stützelemente gehalten ist, so dass die rohrförmigen Elemente in einer dreieckigen Anordnung sind, wobei das Haltemittel (14, 15) die drei rohrförmigen Elemente gezielt in der dreieckigen Anordnung bezüglich einander hält oder die rohrförmigen Elemente freigibt, so dass sie sich bezüglich einander in der dreieckigen Anordnung drehen können,
wobei das obere Stützelement (12) ein Mittel (17) zum Stützen eines Artikels umfasst, wobei das Mittel eine obere Buchse umfasst, die an dem rohrförmigen Element (16) des oberen Stützelements (12) befestigt ist und im Wesentlichen senkrecht zu diesem gerichtet ist, und wobei die Buchse (17) geeignet ist, einen sich nach oben erstreckenden Stützarm (19) aufzunehmen,
**dadurch gekennzeichnet, dass** jedes Basisstützelement (13) Basismittel zum Stützen der Stützhalterung (10) umfasst, wobei jedes Basismittel ein Paar abgewinkelte Basisbuchsen umfasst, die am rohrförmigen Element (20) des Basisstützelements (13) befestigt sind, wobei die Basisbuchsen (21) für jedes Basisstützelement (13) rechtwinklig auf einen Steg (22) treffen, der sich zwischen dem Paar Buchsen (21) jedes Basisstützelements (13) erstreckt.

2. Stützhalterung nach Anspruch 1, wobei jede Basisbuchse (21) geeignet ist, ein sich nach außen erstreckendes Bein (24) aufzunehmen.

3. Stützhalterung nach Anspruch 2, wobei jedes Bein (24) abgesetzt von de r Buchse (21) mit einem Stützsteg (26) endet, der an einem freigebbaren Fuß (25) vorgesehen ist.

4. Stützhalterung nach einem der vorhergehenden Ansprüche, wobei die drei rohrförmigen Elemente (16, 20) einen identischen Außendurchmesser haben und gleich lang sind.

5. Stützhalterung nach Anspruch 4, wobei das Haltemittel (14, 15) jedes der drei rohrförmigen Elemente in Kontakt mit den anderen beiden rohrförmigen Elementen hält.

6. Stützhalterung nach Anspruch 5, wobei das Haltemittel ein Paar gegenüberliegend angeordnete Endplatten (14) umfasst.

7. Stützhalterung nach Anspruch 6, wobei die Endplatten (14) mittels einer mittleren Schrauben-/Mutterverbindung (15) in Position gehalten werden, wobei sich die Schraube mittig zwischen den drei rohrförmigen Elementen erstreckt.

8. Stützhalterung nach Anspruch 6 oder 7, wobei jede Endplatte (14) allgemein dreieckig ist.

9. Stützhalterung nach Anspruch 8, wobei jede Endplatte (14) entlang jedem Rand eine nach innen gedrehte Lippe (29) hat, um die rohrförmigen Elemente gegen eine Bewegung voneinander weg festzuhalten.

10. Stützhalterung nach Anspruch 8 oder 9, wobei die Ecken der dreieckigen Endplatten (14) stumpf sind.

11. Stützhalterung nach Anspruch 9, wobei die Ecken der dreieckigen Endplatten (14) stumpf sind und jede stumpfe Ecke auch eine zusätzliche Lippe (50) hat.

12. Stützhalterung nach Anspruch 9 oder 11, wobei jede nach innen gedrehte Lippe (29, 50) ein oder mehrere Löcher (51) hat, jeweils zur Aufnahme einer selbstbohrenden Schraube, so dass diese sich in das zugeordnete rohrförmige Element erstreckt und es befestigt.

## Revendications

1. Support de montage (10), comprenant:
un élément de support supérieur (12) et une paire d'éléments de support de base (13), les trois éléments de support pouvant se déplacer les uns par rapport aux autres, et des moyens de retenue (14, 15) destinés à permettre la fixation des éléments de support dans différentes positions les uns par rapport aux autres;
les trois éléments de support comprennent chacun un élément tubulaire disposé de façon centrale (16, 20) qui, lors de l'utilisation, est maintenus parallèle aux éléments tubulaires des deux autres éléments de support, de telle sorte que les éléments tubulaires forment un réseau triangulaire, lesdits moyens de retenue (14, 15) maintenant de façon sélective les trois éléments tubulaires dans ledit réseau triangulaire les uns par rapport aux autres, ou libérant les éléments tubulaires de telle sorte qu'ils puissent tourner les uns par rapport aux autres à l'intérieur dudit réseau triangulaire;
l'élément de support supérieur (12) comprend des moyens (17) pour supporter un article, lesdits moyens comprenant une douille supérieure qui est fixée et est orientée de façon sensiblement perpendiculaire à l'élément tubulaire (16) de l'élément de support supérieur (12), et dans lequel la douille (17) est adaptée pour recevoir un bras de support s'étendant vers le haut (13),
**caractérisé en ce que** chaque élément de support de base (13) comprend des moyens de base pour supporter le support de montage (10), chaque moyen de base comprenant une paire de douilles de base inclinées (21) qui sont fixées à l'élément tubulaire (20) de l'élément de support de base (12), dans lequel les douilles de base ((21) pour chaque élément de support de base (13) rencontre perpendiculairement une bande (22) qui s'étend entre la paire de douilles (21) de chaque élément de support de base (13).

2. Support de montage selon la revendication 1, dans lequel chaque douille de base (21) est adaptée pour recevoir une branche s'étendant vers l'extérieur (24).

3. Support de montage selon la revendication 2, dans lequel chaque branche (24) se termine à distance de la douille (21) par une bande de support (26), la bande de support (26) étant disposée sur un pied détachable (25).

4. Support de montage selon l'une quelconque des revendications précédentes, dans lequel les trois éléments tubulaires (16, 20) présentent un diamètre extérieur et une longueur identiques.

5. Support de montage selon la revendication 4, dans lequel les moyens de retenue (14, 15) retiennent chacun des trois éléments tubulaires en contact avec les deux autres éléments tubulaires.

6. Support de montage selon la revendication 5, dans lequel les moyens de retenue comprennent une paire de plaques d'extrémité disposées de façon opposée (14).

7. Support de montage selon la revendication 6, dans lequel les plaques d'extrémité (14) sont maintenues en position à l'aide d'une connexion centrale à boulon et écrou (15), le boulon s'étendant de façon centrale entre les trois éléments tubulaires.

8. Support de montage selon la revendication 6 ou la revendication 7, dans lequel chacune des plaques d'extrémité (14) est de forme essentiellement triangulaire.

9. Support de montage selon la revendication 8, dans lequel chacune des plaques d'extrémité (14) comporte une lèvre retournée le long de chaque bord afin de maintenir les éléments tubulaires bloqués contre tout déplacement les éloignant les uns des autres.

10. Support de montage selon la revendication 8 ou la revendication 9, dans lequel les coins des plaques d'extrémité triangulaires (14) sont tronqués.

11. Support de montage selon la revendication 9, dans lequel les coins des plaques d'extrémité triangulaires (14) sont tronqués, et chaque coin tronqué comporte également une lèvre supplémentaire (50).

12. Support de montage selon la revendication 9 ou la revendication 11, dans lequel chaque lèvre retournée (23, 50) comporte un ou plusieurs trou(s) (51), chaque trou étant destiné à recevoir une vis auto-perceuse qui s'étend dans et fixe l'élément tubulaire associé.
